# EUROPEAN PATENT SPECIFICATION

(11) **EP 0 823 575 B1**
(45) Date of publication and mention of the grant of the patent: **26.03.2003**
(21) Application number: 97306044.5
(22) Date of filing: 08.08.1997
(51) Int. Cl.: F16H 61/22

(54) **Shift lock mechanism for steering column automatic transmission shift lever device**
Schaltsperre für Lenkradschalthebel-Vorrichtung für automatisches Getriebe
Mécanisme de verrouillage pour dispositif de levier de commande d'une transmission automatique fixé sur la colonne de direction

(30) Priority: 09.08.1996 JP 21089696
(43) Date of publication of application: 11.02.1998
(73) Proprietor: Mannoh Kogyo Co., Ltd., Imahonmachi, 4-chome, 14-ban, 24-gou (JP)
(72) Inventor: Tazai, Akira, Aichi-ken, Aichi-gun, Tougou-cho (JP)
(74) Representative: Paget, Hugh Charles Edward

(56) References cited:
- JP-A- 7 151 224
- US-A- 4 934 209
- US-A- 4 936 431
- US-A- 5 050 411

## Description

### BACKGROUND OF THE INVENTION

### 1. Field of the invention

The present invention relates to a shift lock mechanism of an automotive column automatic transmission (AT) shift lever device and to a vehicle including such a device.

### 2. Description of the Related Art

A column AT shift lever device is a device wherein a shift lever is mounted near a column shaft. In a widely employed construction, at the time of a shift operation, for example, from the parking position to the drive position or the like, a select button provided in a shift knob is pressed so that the engagement between a detent plate and a detent member is released by operation of a select rod or a select cable, thereby allowing the shift operation.

Such a column AT shift lever device incorporates a shift lock mechanism. The shift lock mechanism is a mechanism wherein if a key is turned from the LOCK position to the ACC position and the brake pedal is left undepressed, the shift lever is not allowed to be moved from the parking position, and if the shift lever is not returned to the parking position, the key is not allowed to be turned to the LOCK position.

As a shift lock mechanism described above, a solenoid type mechanism has been conventionally employed, wherein a movement of the brake pedal is detected by a switch, and when the brake pedal is depressed, a solenoid is operated to release the shift lock. However, such solenoid type shift lock mechanisms have drawbacks in that a solenoid required adds to the total weight, and in that because there is a need to provide a mechanical emergency unlock mechanism in case of a trouble in the electric system, the entire construction becomes complicated and costly.

US-A-4934209 describes a steering column mounted transmission gear shift mechanism with ignition key interlock, in which a selector lever is pivotally mounted on a tube which is rotated by the shift lever. A plunger axially movable within the tube rotates the selector lever when the shift lever is pulled. An end of the selector lever is biased into contact with detents of a transmission control selector position insert bolted to the steering column. A steering column locking pawl is moved by rotation of the ignition switch to enter a recess on the plunger to prevent axial movement of the plunger thereby blocking movement of the selector lever.

In other words US-A 4934209 discloses a shift lock mechanism of a column AT shift lever device comprising:
a select plate swingable the select plate being pivoted to an end portion of a shaft that is turnable by a shift lever, a distal end of the select plate being engageable with a detent plate; and
a shift lock plate that cooperates with key operation to restrict movement of the select plate.

US-A-5566583 shows a shift lock mechanism in which a shift lock member cooperates with a solenoid actuated by the brake pedal and with the key lock mechanism.

### SUMMARY OF THE INVENTION

The present invention is accomplished to overcome the aforementioned problems of the conventional art. It is an object of the present invention to provide a shift lock mechanism of a column AT shift lever device that is light weight and simple in construction and capable of performing a reliable shift lock function as in a conventional shift lock mechanism.

According to the present invention, there is provided shift lock mechanism of a column AT shift lever device as set out in claim 1.

The shift lock plate may be slidably held by two pins protruding from the outer surface of the retainer.

The shift lock plate may have a recess portion engageable with the distal end of the select plate so that when the recess portion is engaged with the distal end of the select plate, operation of the select plate is prevented.

The shift lock mechanism may further include a control lever provided at an end of the shaft, the control lever being swung by operation of the shift lever so as to operate an automatic transmission through a shift cable.

The select plate may be pivotably connected to a pivot shaft provided in a flat-plate portion formed at an end of the shaft.

The shift lock mechanism may further have a construction wherein the select cable extends through an interior of the shift lever and is fixed to an end portion of the select plate so that when a select button provided in a knob connected to the shift lever is depressed, the select cable is pulled and thereby the select plate is swung.

The shift lock plate may be allowed to slide, provided that the brake pedal is depressed while the column AT shift lever device is in the parking state and that the key is turned to a position other than the predetermined LOCK position.

The shift lock mechanism may further have a construction wherein if the shift lever is not in a predetermined state when the key is about to be returned to the predetermined LOCK position, the engaging portion of the shift lock plate restricts movement of the shift lock protrusion of the key cylinder and thereby prevents the key from being returned to the predetermined LOCK position.

### BRIEF DESCRIPTION OF THE DRAWINGS

The foregoing and further objects, features and advantages of the present invention will become apparent from the following description of a preferred embodiment with reference to the accompanying drawings, wherein like numerals are used to represent like elements and wherein:
Fig. 1 is an elevation of an entire column AT shift lever device incorporating a shift lock mechanism according to a preferred embodiment of the present invention;
Fig. 2 is a left side view of the column AT shift lever device shown in Fig. 1;
Fig. 3 is an enlarged sectional view taken on plane A-A of Fig. 1;
Fig. 4 is a sectional view of portions shown in Fig. 1;
Fig. 5 is a sectional view of portions shown in Fig. 1;
Fig. 6 is a rear view of portions shown in Fig. 1, illustrating the shift lock mechanism in a parking state;
Fig. 7 is a rear view of portions shown in Fig. 1, illustrating the shift lock mechanism in a state during driving;
Fig. 8 illustrates the relationship between a brake pedal and the mechanism; and
Fig. 9 illustrates the relationship between a key cylinder and the mechanism.

### DETAILED DESCRIPTION OF PREFERRED EMBODIMENT

A preferred embodiment of the present invention will be described in detail hereinafter with reference to the drawings.

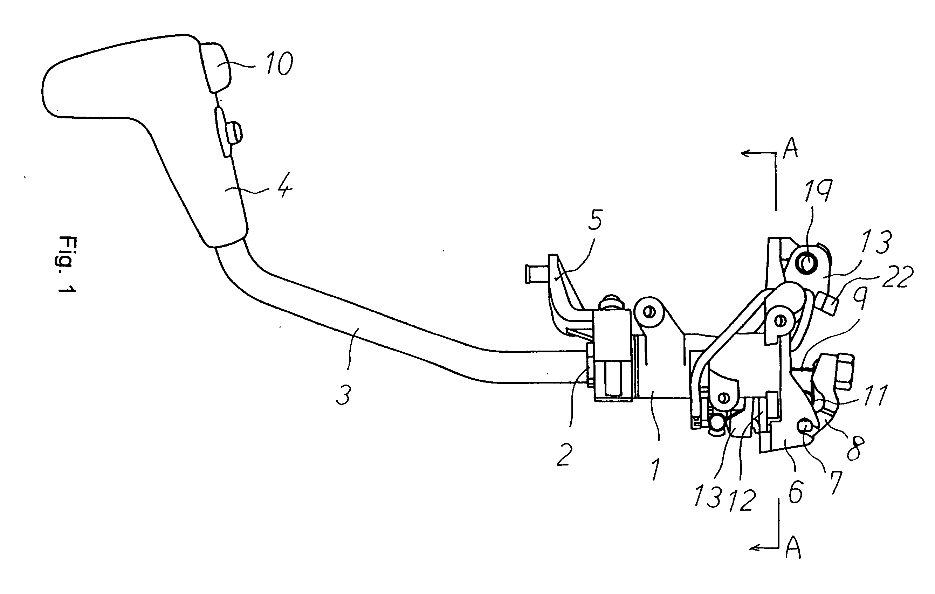

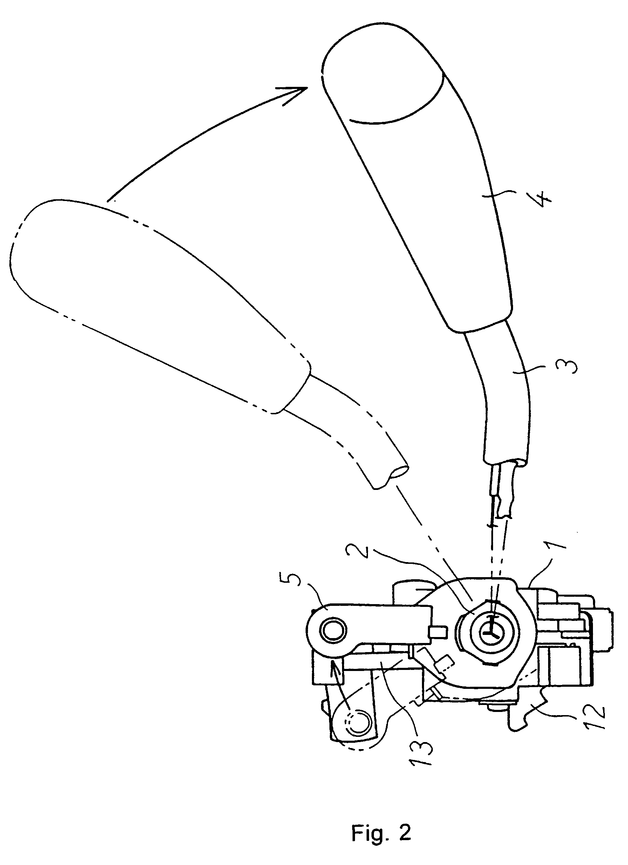

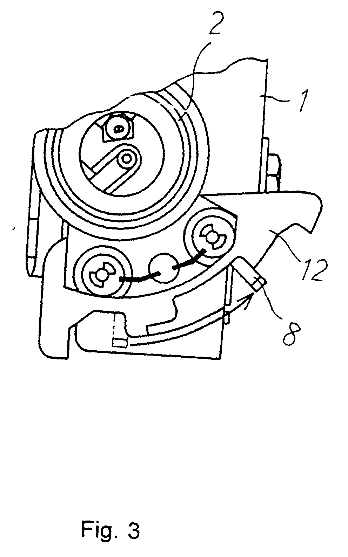

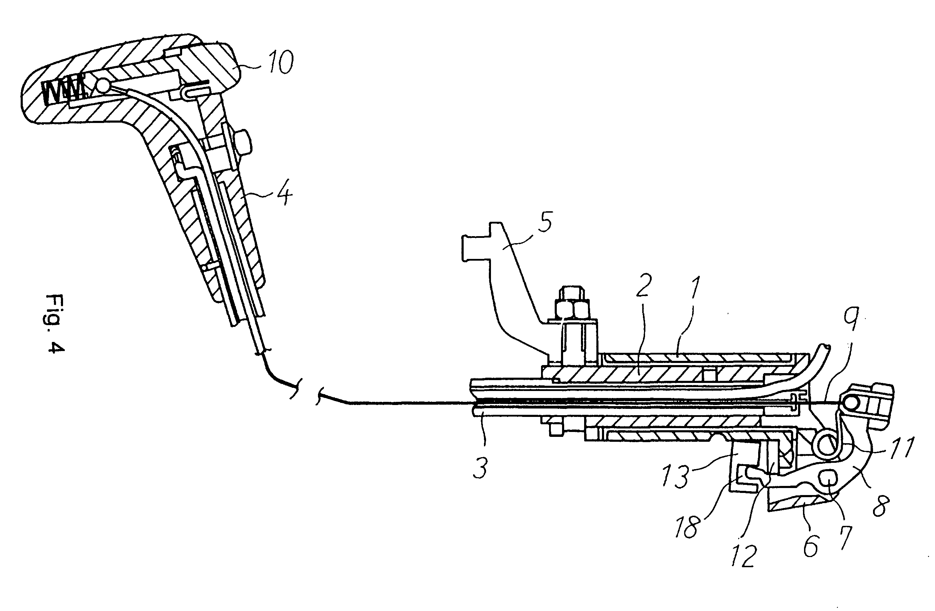

Fig. 1 shows an elevation of an entire column AT shift lever device incorporating a shift lock mechanism according to a preferred embodiment, and Fig. 2 is a left side view thereof, and Fig. 3 is an enlarged sectional view taken on plane A-A of Fig. 1. A shaft 2 is rotatably supported inside a retainer 1. A hollow shift lever 3 has a knob 4. The shaft 2 is fixed to a base portion of the shift lever 3, and can be turned by the shift lever 3. A control lever 5 is provided on an end portion of the shaft 2 as shown in Fig. 4. The control lever 5 swings as the shift lever 3 is operated as indicated in Fig. 2, thereby operating an automatic transmission through a shift cable (not shown).

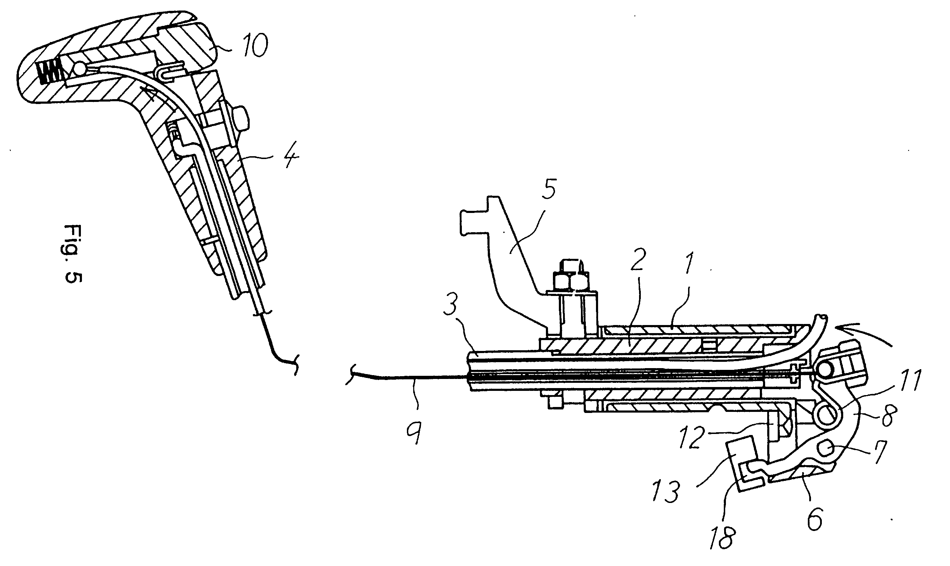

The other end of the shaft 2 is formed together with or firmly connected with a flat plate portion 6, as shown in Figs. 1 and 4. A select plate 8 is pivotally connected to a pivot shaft 7 provided on the flat plate portion 6. Fixed to an end portion of the select plate 8 is a select cable 9 extending through an interior of the shift lever 3. When a select button 10 of the knob 4 is depressed to pull the select cable 9, the select plate 8 swings as indicated in Fig. 5. A main return spring 11 returns the select cable 9 and the select plate 8 to a position indicated in Fig. 4 when the select button 10 is released from the depression.

A generally flat detent plate 12 is engaged with a distal end of the select plate 8 by the force of the main return spring 11. The detent plate 12 has a projection-recess shape as shown in Fig. 3. For a shift from the parking position to another position, it is necessary to move the distal end of the select plate 8 outwardly of the detent plate 12 by pulling the select cable 9 to swing the select plate 8 as indicated in Fig. 5, as in a conventional mechanism.

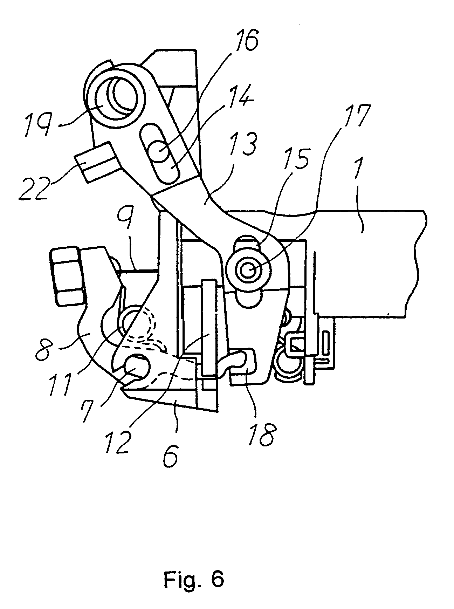

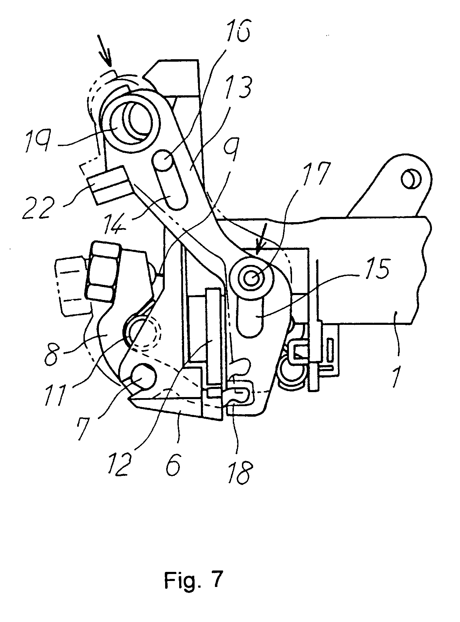

The shift lock mechanism according to this embodiment performs a shift lock function as described above by restricting movement of the select plate 8 in cooperation with braking operation and key operation. For this function, a shift lock plate 13 is provided on an outer surface of the retainer 1. The shift lock plate 13 has long holes 14, 15 as shown in Fig. 6. The shift lock plate 13 is supported by engagement between the long holes 14, 15 and two pins 16, 17 provided on the outer surface of the retainer 1, in such a manner that the shift lock plate 13 is slidable between the position indicated in Fig. 6 and the position indicated in Fig. 7 relative to the retainer 1.

The shift lock plate 13 has, near one of its ends, an engaging recess portion 18 that engages with the distal end of the select plate 8, as shown in Figs. 6 and 7. Therefore, the select plate 8 is operable when the shift lock plate 13 is free (slidable state), and the select plate 8 becomes inoperable when the shift lock plate 13 is locked.

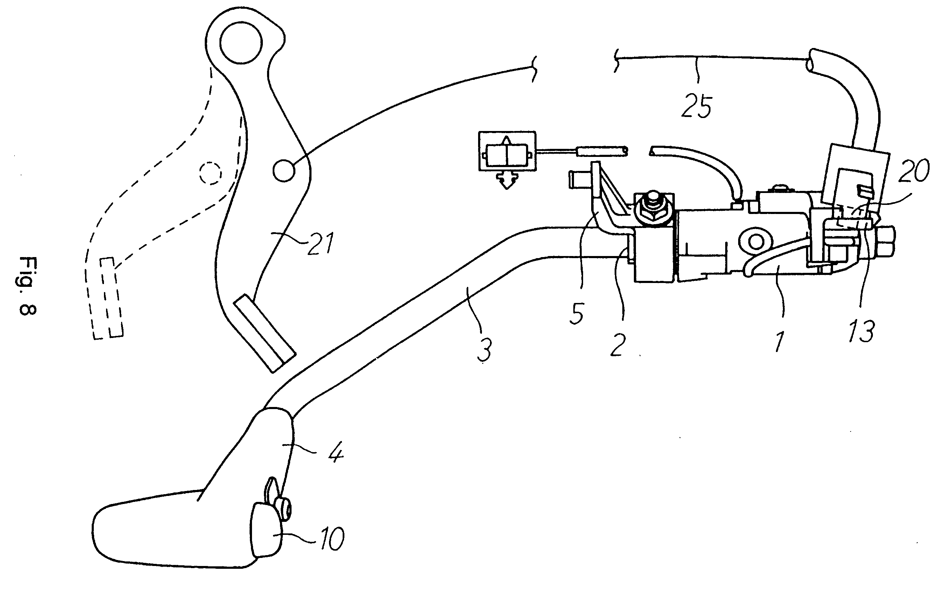

The shift lock plate 13 further has, near the other end thereof, an engaging hole 19 corresponding to a shift lock pin 20 that cooperates with a brake pedal 21, as shown in Fig. 8. The shift lock pin 20 is drawn out of the engaging hole 19 of the shift lock plate 13 by operation of a shift lock cable 25 when the brake pedal 21 is depressed as indicated in Fig. 8. When the shift lever device is in the parking state and the brake pedal 21 is not depressed, the shift lock pin 20 is engaged with the engaging hole 19 of the shift lock plate 13, penetrating a hole provided in the retainer 1, as shown in Fig. 8. In this state, the shift lock plate 13 is locked relative to the retainer 1.

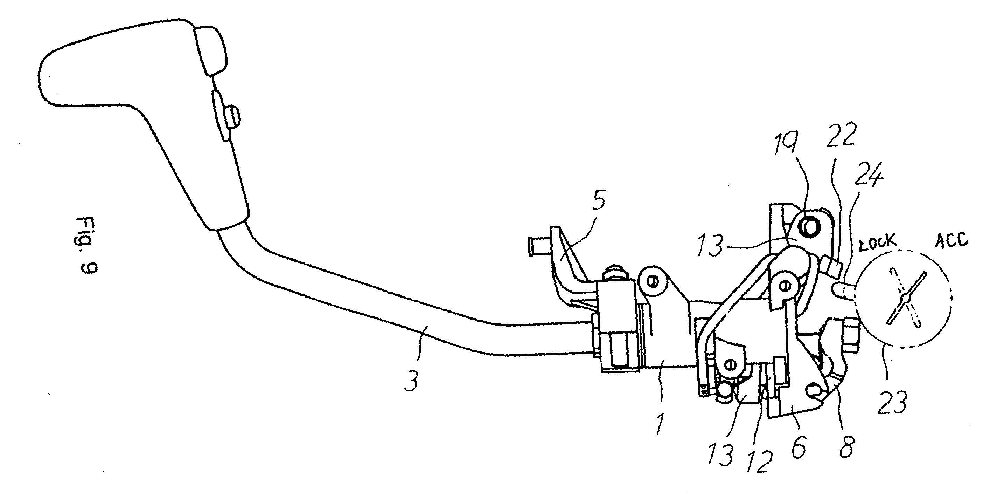

The shift lock plate 13 further has an engaging portion 22 projected near the engaging hole 19. The engaging portion 22 engages with a shift lock protrusion 24 of a key cylinder 23 as shown in Fig. 9. More specifically, when the key is turned to the LOCK position, the shift lock protrusion 24 protrudes to a position indicated by a solid line in Fig. 9 and engages with the engaging portion 22 of the shift lock plate 13, thereby locking the shift lock plate 13. When the key is turned to the ACC position, the shift lock protrusion 24 of the key cylinder 23 is withdrawn as indicated by a broken line so that the shift lock plate 13 becomes free. Furthermore, when the shift lock plate 13 is moved downward from the plane of the drawing sheet as indicated in Fig. 7, the key is prevented from being returned to the LOCK position since the shift lock protrusion 24 of the key cylinder 23 hits the engaging portion 22 of the shift lock plate 13.

The operation of the shift lock mechanism according to the present invention will next be described.

In the parking state, the engaging portion 22 of the shift lock plate 13 is engaged with the shift lock protrusion 24 of the key cylinder 23 as shown in Fig. 9, and the shift lock pin 20 is engaged with the engaging hole 19 of the shift lock plate 13, so that the shift lock plate 13 cannot be moved. As a result, the end portion of the select plate 8 remains fixed in the position indicated in Figs. 4 and 6 by the engaging recess portion 18 of the shift lock plate 13, so that the shift lever 3 cannot be shifted from the parking position to any other position.

When it is desired to start the motor vehicle, the key is first turned from the LOCK position to the ACC position to withdraw the shift lock protrusion 24 of the key cylinder 23, thereby releasing it from the engagement with the engaging portion 22 of the shift lock plate 13. When the brake pedal 21 is subsequently depressed, the shift lock pin 20 is pulled out of the engaging hole 19 of the shift lock plate 13. As a result, the shift lock plate 13 becomes free. When the select button 10 of the knob 4 is subsequently depressed to pull the select cable 9, the select plate 8 swings and pushes the shift lock plate 13 upward, thereby releasing the shift lock plate 13 from the engagement with the detent plate 12. Thereby, it becomes possible to shift the shift lever 3 freely to any other position.

When the shift lever 3 is at a position other than the parking position, the shift lock plate 13 assumes a relatively lowered position as indicated in Fig. 7, so that the engaging hole 19 of the shift lock plate 13 assumes a position deviated relative to the hole of the retainer and the shift lock pin 20. Therefore, the shift lock pin 20 will not enter the engaging hole 19 of the shift lock plate 13 during driving even if the brake pedal 21 is released. For parking, the key can be turned to the LOCK position only after the shift lever 3 is returned to the parking position to raise the shift lock plate 13 to a position indicated in Fig. 6. Otherwise, the key cannot be turned to the LOCK position because the engaging portion 22 of the shift lock plate 13 prevents the shift lock protrusion 24 of the key cylinder 23 from advancing.

As understood from the above description, the present invention is able to mechanically perform shift lock as in the conventional art, by using the shift lock plate. However, unlike the conventional solenoid type mechanism, the mechanism of the present invention does not require a solenoid, thereby allowing a weight reduction. Furthermore, since it is not necessary to separately provide a mechanical emergency unlock mechanism, the invention further provides advantages in that the construction can be simplified and the production cost can be reduced.

While the present invention has been described with reference to what is presently considered to be a preferred embodiment thereof, it is to be understood that the invention is not limited to the disclosed embodiment or constructions.

The invention also consists in a vehicle, e.g. a car, having the column AT shift lever mounted in it.

## Claims

1. A shift lock mechanism of a column AT shift lever device comprising:
a select plate (8) pivoted to an end portion of a shaft (2) which is turnable by a shift lever (3), the select plate (8) being swingable by operation of a select cable (9), and a distal end of the select plate (8) being engageable with a detent plate (12); and
a shift lock plate (13) which cooperates with at least one of braking operation and key operation to restrict movement of the select plate (8), the shift lock plate (13) being provided on an outer surface of a retainer (1) holding the shaft (2), in such a manner that the shift lock plate (13) is slidable relative to the retainer.

2. A shift lock mechanism of a column AT shift lever device according to claim 1, wherein the shift lock plate (13) is slidably held by two pins (16,17) protruding from the outer surface of the retainer (1).

3. A shift lock mechanism of a column AT shift lever device according to claim 1 or 2, wherein the shift lock plate (13) comprises recess portion (18) engageable with the distal end of the select plate (8) so that when the recess portion (18) is engaged with the distal end of the select plate, operation of the select plate is prevented.

4. A shift lock mechanism of a column AT shift lever device according to any one of claims 1 to 3, wherein the shift lock plate (13) comprises a hole (19) formed near an end of the shift lock plate, the hole (19) being engageable with a shift lock pin (20) cooperable with a brake pedal so that when the brake pedal is not depressed while the column AT shift lever device is in a parking state, the shift lock pin (20) is engaged with the engaging hole (19) and thereby prevents the shift lock plate from sliding.

5. A shift lock mechanism of a column AT shift lever device according to any one of claims 1 to 4, wherein the shift lock plate (13) comprises a portion (22) engageable with a shift lock protrusion (24) provided on a key cylinder so that when a key is turned to a predetermined LOCK position, the portion (22) of the shift lock plate (13) becomes engaged with the shift lock protrusion (24) and thereby prevents the shift lock plate from sliding.

6. A shift lock mechanism of a column AT shift lever device according to claim 5, wherein if the shift lever is not in a predetermined state when the key is about to be returned to the predetermined LOCK position, the portion (22) of the shift lock plate (13) restricts movement of the shift lock protrusion (24) of the key cylinder and thereby prevents the key from being returned to the predetermined LOCK position.

7. A shift lock mechanism of a column AT shift lever device according to any one of claims 1 to 6, further comprising a control lever (5) provided at an end of the shaft (2), the control lever being swung by operation of the shift lever (3) so as to operate an automatic transmission through a shift cable.

8. A shift lock mechanism of a column AT shift lever device according to any one of claims 1 to 7, wherein the select plate (8) is pivotably connected to a pivot shaft (7) provided in a flat-plate portion (6) formed at an end of the shaft (2).

9. A shift lock mechanism of a column AT shift lever device according to claim 8, wherein the select cable (9) extends through an interior of the shift lever (3) and is fixed to an end portion for the select plate (8) so that when a select button (10) provided in a knob (4) connected to the shift lever (3) is depressed, the select cable is pulled and thereby the select plate is swung.

10. A shift lock mechanism of a column AT shift lever device according to claims 4 and 5, wherein the shift lock plate (13) is allowed to slide, provided that the brake pedal is depressed while the column AT shift lever device is in the parking state and that the key is turned to a position other than the predetermined LOCK position.

11. A vehicle having a shift lock mechanism of a column AT shift lever, according to any one of claims 1 to 10.

## Patentansprüche

1. Schaltsperrmechanismus für eine Lenksäulen-Automatikgetriebe-Schalthebelvorrichtung, umfassend:
eine Auswahlplatte (8), die gelenkig mit einem Endabschnitt einer Welle (2) verbunden ist, die von einem Schalthebel (3) gedreht werden kann, wobei die Auswahlplatte (8) durch die Betätigung eines Auswahlkabels (9) schwenkbar ist, wobei ein distales Ende der Auswahlplatte (8) mit einer Arretierplatte (12) in Eingriff gebracht werden kann; und
eine Schaltsperrplatte (13), die mit zumindest einem aus einem Bremsvorgang und einer Schlüsselbetätigung zusammenwirkt, um die Bewegung der Auswahlplatte (8) einzuschränken, wobei die Schaltsperrplatte (13) an einer Außenfläche einer Halterung (1) vorgesehen ist, die die Welle (2) hält, so dass die Schaltsperrplatte (13) in Bezug auf die Halterung verschiebbar ist.

2. Schaltsperrmechanismus für eine Lenksäulen-Automatikgetriebe-Schalthebelvorrichtung nach Anspruch 1, worin die Schaltsperrplatte (13) von zwei Stiften (16, 17) verschiebbar gehalten ist, die von der Außenfläche der Halterung (1) vorragen.

3. Schaltsperrmechanismus für eine Lenksäulen-Automatikgetriebe-Schalthebelvorrichtung nach Anspruch 1 oder 2, worin die Schaltsperrplatte (13) einen Ausnehmungsabschnitt (18) umfasst, der mit dem distalen Ende der Auswahlplatte (8) in Eingriff bringbar ist, so dass, wenn sich der Ausnehmungsabschnitt (18) mit dem distalen Ende der Auswahlplatte in Eingriff befindet, die Betätigung der Auswahlplatte verhindert wird.

4. Schaltsperrmechanismus für eine Lenksäulen-Automatikgetriebe-Schalthebelvorrichtung nach einem der Ansprüche 1 bis 3, worin die Schaltsperrplatte (13) ein Loch (19) umfasst, das nahe einem Ende der Schaltsperrplatte ausgebildet ist, wobei das Loch (19) mit einem Schaltsperrstift (20) in Eingriff bringbar ist, der mit einem Bremspedal zusammenwirken kann, so dass, wenn das Bremspedal nicht niedergedrückt wird, während sich die Lenksäulen-Automatikgetriebe-Schalthebelvorrichtung in einem Parkzustand befindet, der Schaltsperrstift (20) mit dem Eingreifloch (19) in Eingriff ist und dadurch verhindert, dass sie Schaltsperrplatte gleitet.

5. Schaltsperrmechanismus für eine Lenksäulen-Automatikgetriebe-Schalthebelvorrichtung nach einem der Ansprüche 1 bis 4, worin die Schaltsperrplatte (13) einen Abschnitt (22) umfasst, der mit einem Schaltsperrvorsprung (24) in Eingriff bringbar ist, der auf einem Schlüsselzylinder vorgesehen ist, so dass, wenn ein Schlüssel in eine vorbestimmte SPERR-Position gedreht wird, der Abschnitt (22) der Schaltsperrplatte (13) mit dem Schaltsperrvorsprung (24) in Eingriff kommt und dadurch verhindert, dass die Schaltsperrplatte gleitet.

6. Schaltsperrmechanismus für eine Lenksäulen-Automatikgetriebe-Schalthebelvorrichtung nach Anspruch 5, worin, wenn sich der Schalthebel nicht einem vorbestimmten Zustand befindet, unmittelbar wenn der Schlüssel wieder in die vorbestimmte SPERR-Position zurückgebracht werden soll, der Abschnitt (22) der Schaltsperrplatte (13) eine Bewegung des Schaltsperrvorsprungs (24) des Schlüsselzylinders einschränkt und dadurch verhindert, dass der Schlüssel in die vorbestimmte SPERR-Position zurückgebracht wird.

7. Schaltsperrmechanismus für eine Lenksäulen-Automatikgetriebe-Schalthebelvorrichtung nach einem der Ansprüche 1 bis 6, der weiters einen Steuerhebel (5) umfasst, der an einem Ende der Welle (2) vorgesehen ist, wobei der Steuerhebel durch die Betätigung des Schalthebels (3) so geschwenkt wird, dass er ein Automatikgetriebe über ein Schaltkabel betätigt.

8. Schaltsperrmechanismus für eine Lenksäulen-Automatikgetriebe-Schalthebelvorrichtung nach einem der Ansprüche 1 bis 7, worin die Auswahlplatte (8) gelenkig mit einer feststehenden Drehachse (7) verbunden ist, die in einem Flachplattenabschnitt (6) vorgesehen ist, der an einem Ende der Welle (2) ausgebildet ist.

9. Schaltsperrmechanismus für eine Lenksäulen-Automatikgetriebe-Schalthebelvorrichtung nach Anspruch 8, worin sich das Auswahlkabel (9) durch ein Inneres des Schalthebels (3) erstreckt und an einem Endabschnitt für die Auswahlplatte (8) befestigt ist, so dass, wenn ein Auswahlknopf (10) niedergedrückt wird, der in einem mit dem Schalthebel (3) verbundenen Knauf (4) vorgesehen ist, das Auswahlkabel gezogen und die Auswahlplatte dadurch geschwenkt wird.

10. Schaltsperrmechanismus für eine Lenksäulen-Automatikgetriebe-Schalthebelvorrichtung nach einem der Ansprüche 4 und 5, worin die Schaltsperrplatte (13) gleiten kann, mit der Maßgabe, dass das Bremspedal niedergedrückt wird, während sich die Lenksäulen-Automatikgetriebe-Schalthebelvorrichtung in einem Parkzustand befindet, und der Schlüssel in eine andere Position als die vorbestimmte SPERR-Position gedreht ist.

11. Fahrzeug mit einem Schaltsperrmechanismus für eine Lenksäulen-Automatikgetriebe-Schalthebelvorrichtung nach einem der Ansprüche 1 bis 10.

## Revendications

1. Mécanisme de verrouillage pour un dispositif de levier de commande d'une transmission automatique fixé sur la colonne de direction comprenant:
une plaque de sélection (8) amenée à pivoter à une portion d'extrémité d'un arbre (2) qui peut être tournée par un levier de changement (3), la plaque de sélection (8) pouvant pivoter par l'actionnement d'un câble de sélection (9), et une extrémité distale de la plaque de sélection (8) pouvant être mise en prise avec une plaque de positionnement (12); et
une plaque de verrouillage de changement (13) qui coopère avec au moins l'une parmi l'opération de freinage et l'opération de clé pour empêcher le déplacement de la plaque de sélection (8), la plaque de verrouillage de changement (13) étant prévue sur une surface extérieure d'un élément de retenue (1) retenant l'arbre (2) de telle manière que la plaque de verrouillage de changement (13) peut coulisser relativement à l'élément de retenue.

2. Mécanisme de verrouillage pour un dispositif de levier de commande d'une transmission automatique fixé sur la colonne de direction selon la revendication 1, où la plaque de verrouillage de changement (13) est retenue d'une manière coulissante par deux axes (16, 17) dépassant de la surface extérieure de l'élément de retenue (1).

3. Mécanisme de verrouillage pour un dispositif de levier de commande d'une transmission automatique fixé sur la colonne de direction selon la revendication 1 ou 2, où la plaque de verrouillage de changement (13) comprend une portion évidée (18) pouvant être mise en prise avec l'extrémité distale de la plaque de sélection (8) de telle sorte que lorsque la portion évidée (18) est mise en prise avec l'extrémité distale de la plaque de sélection, un fonctionnement de la plaque de sélection est empêché.

4. Mécanisme de verrouillage pour un dispositif de levier de commande d'une transmission automatique fixé sur la colonne de direction selon l'une des revendications 1 à 3, où la plaque de verrouillage de changement (13) comprend un trou (19) formé près d'une extrémité de la plaque de verrouillage de changement, dans le trou (19) peut s'engager un axe de verrouillage de changement (20) apte à coopérer avec une pédale de frein de telle sorte que lorsque la pédale de frein n'est pas enfoncée pendant que le dispositif de levier de commande de la transmission automatique fixé sur la colonne de direction se trouve à l'état de stationnement, l'axe de verrouillage de changement (20) est engagé dans le trou d'engagement (19) et empêche ainsi le coulissement de la plaque de verrouillage de changement.

5. Mécanisme de verrouillage pour un dispositif de levier de commande d'une transmission automatique fixé sur la colonne de direction selon l'une des revendications 1 à 4, où la plaque de verrouillage de changement (13) comprend une portion (22) pouvant être mise en prise avec une saillie de verrouillage de changement (24) réalisée sur un cylindre de clé de telle sorte que lorsqu'une clé est tournée à une position de verrouillage prédéterminée, la portion (22) de la plaque de verrouillage de changement (13) vient en prise avec la saillie de verrouillage de changement (24) et empêche ainsi le coulissement de la plaque de verrouillage de changement.

6. Mécanisme de verrouillage pour un dispositif de levier de commande d'une transmission automatique fixé sur la colonne de direction selon la revendication 5 où, si le levier de changement ne se trouve pas dans un état prédéterminé lorsque la clé est sur le point d'être ramenée à la position de verrouillage prédéterminée, la portion (22) de la plaque de verrouillage de changement (13) empêche le déplacement de la saillie de verrouillage de changement (24) du cylindre de clé et empêche ainsi que la clé soit ramenée à la position de verrouillage prédéterminée.

7. Mécanisme de verrouillage pour un dispositif de levier de commande d'une transmission automatique fixé sur la colonne de direction selon l'une des revendications 1 à 6, comprenant en outre un levier de commande (5) prévu à une extrémité de l'arbre (2), le levier de commande étant amené à pivoter par l'actionnement du levier de changement (3) de manière à faire fonctionner une transmission automatique par un câble de changement.

8. Mécanisme de verrouillage pour un dispositif de levier de commande d'une transmission automatique fixé sur la colonne de direction selon l'une des revendications 1 à 7, où la plaque de sélection (8) est reliée d'une manière pivotante à un arbre pivotant (7) prévu dans une portion de plaque plate (6) formée à une extrémité de l'arbre (2).

9. Mécanisme de verrouillage pour un dispositif de levier de commande d'une transmission automatique fixé sur la colonne de direction selon la revendication 8, où le câble de sélection (9) s'étend à travers l'intérieur du levier de changement (3) et est fixé à une portion d'extrémité de la plaque de sélection (8) de telle sorte que lorsqu'un bouton de sélection (10) réalisé dans une poignée (4) relié au levier de changement (3) est enfoncé, le câble de sélection est tiré et de ce fait la plaque de sélection est amenée à pivoter.

10. Mécanisme de verrouillage pour un dispositif de levier de commande d'une transmission automatique fixé sur la colonne de direction selon les revendications 4 et 5, où la plaque de verrouillage du changement (13) peut coulisser, à condition que la pédale de frein soit enfoncée pendant que le dispositif de levier de commande de la transmission automatique fixé sur la colonne de direction se trouve à l'état de stationnement et que la clé soit tournée à une position autre que la position de verrouillage prédéterminée.

11. Véhicule comportant un mécanisme de verrouillage pour un dispositif de levier de commande d'une transmission automatique fixé sur la colonne de direction selon l'une des revendications 1 à 10.
